(19) Europäisches Patentamt
European Patent Office
Office européen des brevets

(11) **EP 4 075 230 B1**

(12) **EUROPÄISCHE PATENTSCHRIFT**

(45) Veröffentlichungstag und Bekanntmachung des Hinweises auf die Patenterteilung:
**08.05.2024 Patentblatt 2024/19**

(21) Anmeldenummer: **22164675.5**

(22) Anmeldetag: **28.03.2022**

(51) Internationale Patentklassifikation (IPC):
***G05D 1/02*** *(2020.01)*

(52) Gemeinsame Patentklassifikation (CPC):
**G05D 1/0274; G05D 1/0238**

(54) **KARTENAKTUALISIERUNG FÜR EINEN HAUSHALTSROBOTER**

CARD UPDATE FOR A DOMESTIC ROBOT

MISE À JOUR DE CARTE POUR UN ROBOT ÉLECTROMÉNAGER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.04.2021 DE 102021203703**

(43) Veröffentlichungstag der Anmeldung:
**19.10.2022 Patentblatt 2022/42**

(73) Patentinhaber: **BSH Hausgeräte GmbH**
**81739 München (DE)**

(72) Erfinder:
• **Daniel, Kristina**
**97616 Bad Neustadt (DE)**
• **Schmitt, Kai**
**97633 Saal (DE)**
• **Schnitzer, Frank**
**97616 Bad Neustadt (DE)**

(56) Entgegenhaltungen:
**EP-A1- 3 660 617     US-A1- 2019 212 752**

• **QADEER BAIG ET AL: "Low level data fusion of laser and monocular color camera using occupancy grid framework", CONTROL AUTOMATION ROBOTICS&VISION (ICARCV), 2010 11TH INTERNATIONAL CONFERENCE ON, IEEE, 7. Dezember 2010 (2010-12-07), Seiten 905-910, XP031899956, DOI: 10.1109/ICARCV.2010.5707407 ISBN: 978-1-4244-7814-9**

**Beschreibung**

Die Erfindung betrifft einen Haushaltsroboter. Insbesondere betrifft die Erfindung die Aktualisierung einer Navigationskarte eines autonom beweglichen Roboters für einen Haushalt.

Ein Roboter ist dazu eingerichtet, sich eigenständig in einem Haushalt zu bewegen und zu navigieren. Dabei soll der Roboter eine vorbestimmte Nutzfunktion ausführen, beispielsweise ein Reinigen einer Bodenfläche. Zur Navigation steht dem Roboter eine Orientierungskarte zur Verfügung, die er beispielsweise aufgrund von Abtastungen eines Umfelds selbst erstellen kann. Die Orientierungskarte kann insbesondere als topographische Karte oder als Belegungskarte bzw. Belegungsraster ausgeführt sein. Die Belegungskarte gibt darüber Aufschluss, welche Stellen des Haushalts für den Roboter erreichbar sind und wie diese Stellen relativ zueinander liegen. Nicht erreichbare Stellen können permanent sein, beispielsweise in Form einer Wand, oder lokal, beispielsweise in Form eines verschiebbaren Tischs oder Stuhls.

Eine besondere Herausforderung im Haushalt besteht darin, das Belegungsraster fortlaufend zu aktualisieren, um eine hohe Beweglichkeit des Roboters zu ermöglichen. Dazu soll das Belegungsraster ein Format aufweisen, das eine rasche und effiziente Einarbeitung neuer Informationen ermöglicht, um insbesondere temporäre Hindernisse möglichst aktuell im Belegungsraster abzubilden.

Eine der vorliegenden Erfindung zu Grunde liegende Aufgabe besteht in der Angabe einer verbesserten Technik zur Aktualisierung eines Belegungsrasters eines autonom beweglichen Roboters für einen Haushalt. Die Erfindung löst diese Aufgabe mittels der Gegenstände der unabhängigen Ansprüche. Unteransprüche geben bevorzugte Ausführungsformen wieder.

Ein autonom beweglicher Roboter für einen Haushalt umfasst einen Sensor zur Abtastung des Haushalts im Umfeld des Roboters; eine Verarbeitungseinrichtung zur Bestimmung eines Belegungsrasters auf der Basis der Abtastung; wobei das Belegungsraster eine Vielzahl Zellen umfasst; wobei eine Zelle einen Abschnitt des Haushalts repräsentiert; wobei für die Zelle der Logit einer Belegung durch einen Gegenstand angegeben ist; wobei der Logit den natürlichen Logarithmus einer Chance betrifft, dass die Zelle durch einen Gegenstand belegt ist; wobei die Chance eine Wahrscheinlichkeit einer Belegung, geteilt durch eine Wahrscheinlichkeit einer Nichtbelegung der Zelle umfasst; wobei die Verarbeitungseinrichtung dazu eingerichtet ist, eine Bewegung des Roboters im Haushalt derart zu steuern, dass ein Abschnitt, dessen zugehörige Zelle einen Logit aufweist, der einen vorbestimmten Schwellenwert übersteigt, nicht betreten wird. Stand der Technik ist EP 3 660 617 A1.

Es wurde erkannt, dass ein Belegungsraster ("occupancy grid") mit Logit (oder "log odds") Werten besonders gut dazu geeignet ist, die sich häufig ändernden Umstände eines Haushalts für einen autonomen Roboter abzubilden. Das Belegungsraster kann auf der Basis von Abtastungen mittels unterschiedlicher Sensoren aktualisiert werden. Ein zunächst als belegt bestimmter Abschnitt kann durch ausreichend viele Bestimmungen eines freien Zustands wieder als frei bestimmt werden, sodass ein nicht mehr vorliegendes Hindernis im Belegungsraster abgebildet werden kann. Der Logit hat einen Definitionsbereich zwischen 0 und 1. Der Logit bildet Wahrscheinlichkeiten zwischen 0 und 0,5 auf einen negativen Wert, eine Wahrscheinlichkeit von 0,5 auf den Wert null und eine Wahrscheinlichkeit zwischen 0,5 und 1 auf einen positiven Wert ab.

Das Belegungsraster kann auch auf der Basis nicht durch den Roboter lokal bestimmter, sondern importierter Informationen aktualisiert werden. Eine Reihenfolge, in der Belegungsinformationen eingepflegt werden, ist dabei nicht von Bedeutung. So können lokale Erkenntnisse verbessert mit von extern erhobenen und zugeführten Informationen kombiniert werden.

Laut der Erfindung hat der Roboter eine Kommunikationseinrichtung zum Empfangen eines weiteren Belegungsrasters eines anderen Roboters im Haushalt ; wobei die Verarbeitungseinrichtung dazu eingerichtet ist, das weitere Belegungsraster in das vorhandene zu integrieren, indem die Logit-Werte zueinander korrespondierender Zellen jeweils addiert werden. Das Ergebnis einer Addition kann dann in der entsprechenden Zelle im Belegungsraster abgelegt werden.

Das Einpflegen empfangener Informationen kann rasch und einfach durch Addieren von Logit-Werten zueinander korrespondierender Zellen erfolgen. Die Verarbeitungseinrichtung kann das Aktualisieren während eines Betriebs des Roboters durchführen. Der Betrieb kann durch eine gerade erfolgende Aktualisierung nicht beeinträchtigt werden. Eine Navigation des Roboters kann selbst dann möglich sein, wenn einige Zellen des lokalen Belegungsrasters bereits aktualisiert sind und andere noch nicht. Betreffen ein lokales und ein empfangenes Belegungsraster einander überschneidende, aber nicht identische Gebiete des Haushalts, so kann ein bestehendes Belegungsraster aufgrund der empfangenen Informationen bezüglich ihres Gebiets erweitert werden oder es werden nur empfangene Informationen verwendet, die das lokal bekannte Gebiet des Haushalts betreffen. Dies kann bei knappem Speicherplatz zur Ablage des Belegungsrasters vorteilhaft sein.

Der andere Roboter kann gleich oder abweichend vom ersten Roboter aufgebaut sein. Beispielsweise kann ein Belegungsraster zwischen einem fahrenden, einem fliegenden oder einem fest installierten anderen Roboter ausgetauscht werden. Voraussetzung zur Kombination zweier Belegungsraster ist lediglich, dass einander zugeordnete Zellen in den Rastern gefunden werden können.

Die Verarbeitungseinrichtung kann dazu eingerichtet sein, das empfangene Belegungsraster zu speichern, falls keine zueinander korrespondierenden Zellen zwischen den Belegungsrastern bestimmt werden können. Dies kann insbesondere der Fall sein, wenn die Belegungsraster disjunkte Gebiete des Haushalts betreffen oder das lokale Belegungsraster noch nicht ausreichend gefestigt ist, um eine Lage der Belegungsraster zueinander anhand von Strukturen belegter oder freier Bereiche sicher zu erkennen. Das gespeicherte Belegungsraster kann zu einem späteren Zeitpunkt eingepflegt werden, wenn weitere Informationen im lokalen Belegungsraster verfügbar sind. Diese weiteren Informationen können mittels des Sensors abgetastet oder von einer anderen Quelle empfangen werden.

Letztlich können Informationen einer beliebigen Vielzahl an Quellen miteinander kombiniert werden, um ein verbessertes Belegungsraster zur Steuerung des Roboters bereitzustellen. Die unterschiedlichen Belegungsraster können unter unterschiedlichen Bedingungen entstanden sein. Beispielsweise kann ein Roboter, der einen vorbestimmten Bereich des Haushalts nicht betreten darf, trotzdem Informationen über dessen Belegung von einem anderen Roboter empfangen, der den Bereich betreten darf oder ihn abtasten kann, ohne ihn zu betreten. Die empfangenen Informationen können sofort oder später vorteilhaft verwendet werden.

Die Verarbeitungseinrichtung kann dazu eingerichtet sein, einen Abschnitt des Haushalts mittels des Sensors abzutasten, den Logit der Belegung des Abschnitts auf der Basis der Abtastung zu bestimmen und den bestimmten Logit zu einem Logit einer den Abschnitt repräsentierenden Zelle des Belegungsrasters zu addieren. So kann das lokale Belegungsraster auf der Basis eigener Abtastungen des Roboters sukzessive verbessert werden.

Der Roboter kann außerdem eine Kommunikationseinrichtung zur Bereitstellung des bestimmten Belegungsrasters umfassen. Das Belegungsraster kann insbesondere an einen anderen Roboter im selben Haushalt bereitgestellt werden. In Verbindung mit der oben genannten Ausführungsform können zwei Roboter ihre Belegungsraster in beiden Richtungen austauschen und so verbessert kooperativ zusammenwirken.

Die Verarbeitungseinrichtung kann ferner dazu eingerichtet sein, auf der Basis einer Vielzahl Abtastungen ein lokales Belegungsraster zu bestimmen und das lokale Belegungsraster bereitzustellen. So kann vermieden werden, dass Informationen bezüglich jeder einzelnen Abtastung einzeln bereitgestellt oder übermittelt werden müssen. Durch das Akkumulieren von Abtastungen in einem lokalen Belegungsraster kann eine effiziente Reduktion zu übermittelnder oder seitens eines Empfängers zu verarbeitender Informationen erfolgen.

Die Verarbeitungseinrichtung kann dazu eingerichtet sein, das lokale Belegungsraster nach dem Bereitstellen in ein globales Belegungsraster zu integrieren und das lokale Belegungsraster neu zu initialisieren. Die Fortbewegung und Hindernisumfahrung des Roboters kann durch die Kenntnis über das globale Belegungsraster beeinflusst werden. Durch Verwendung eines lokalen Belegungsrasters kann ein Aufwand für dessen Aktualisieren reduziert sein. Das Initialisieren des lokalen Belegungsrasters kann mit einem vorbestimmten Wahrscheinlichkeitswert wie 0,5 erfolgen, um eine Unbestimmtheit bezüglich der Belegung auszudrücken.

Das globale Belegungsraster kann aufgebaut sein wie das lokale, indem es Zellen aufweist, die jeweils einen Abschnitt des Haushalts repräsentieren, und die Logit-Werte bezüglich deren Belegung tragen. Die Logit-Werte können auf der Basis mehrerer Abtastungen einfach und effizient durch Addieren verbessert werden, wie hierin genauer ausgeführt ist. Abtastungen können eine vorbestimmte Fläche des Haushalts betreffen, die durch mehrere Zellen repräsentiert sind. Eine Abtastung, die mehreren Zellen entspricht, kann auch temporäres Belegungsraster genannt werden. Das temporäre Belegungsraster kann durch zellenweise Addition mit einem anderen Belegungsraster zusammengeführt werden. In einer Ausführungsform kann das Belegungsraster immer dann bereitgestellt werden, wenn eine vorbestimmte Anzahl Abtastungen erfolgt ist, die in das Belegungsraster eingeflossen sind. Das Belegungsraster kann auch periodisch bereitgestellt werden.

Das lokale Belegungsraster kann vorbestimmten Empfänger bereitgestellt und so lange bereitgehalten werden, bis es erfolgreich an alle vorbestimmten Empfänger übermittelt wurde. Ein Empfänger, insbesondere ein weiterer Roboter im Haushalt, muss daher nicht ständig zum Empfang neuer Belegungsraster bereitstehen, sondern kann beispielsweise vorübergehend abgeschaltet werden oder sich vorübergehend aus einem Kommunikationsbereich entfernen. Für ein noch nicht an alle Empfänger zugestelltes Belegungsraster kann ein dedizierter Speicher vorgesehen sein.

Nach einem weiteren Aspekt der vorliegenden Erfindung umfasst ein System einen ersten hierin beschriebenen Roboter, der dazu eingerichtet ist, ein Belegungsraster zu empfangen, und einen zweiten hierin beschriebenen Roboter, der dazu eingerichtet ist, ein Belegungsraster bereitzustellen. Jeder Roboter kann auch beide Möglichkeiten unterstützen. Das System kann eine beliebige Vielzahl Roboter umfassen, die auf die beschriebene Weise kooperativ zusammenwirken können, um Informationen über den Belegungszustand von Abschnitten des Haushalts untereinander auszutauschen. So können alle Roboter von den Abtastungen der jeweils anderen Roboter profitieren und sich verbessert sicher im Haushalt bewegen. Insbesondere sich rasch oder häufig ändernde Belegungszustände durch mobile Gegenstände können so verbessert bestimmt und verbreitet werden. Eine Wegplanung eines Roboters kann verbessert sein, indem er freie oder frei gewordene Abschnitte des Haushalts verbessert identifizieren und nutzen kann.

Das System kann auch eine zentrale Stelle umfassen, die dazu eingerichtet ist, ein Belegungsraster von einem der Roboter zu empfangen und einem anderen Roboter bereitzustellen. Die zentrale Stelle kann ein empfangenes Belegungsraster so lange zwischenspeichern, bis alle vorgesehenen Roboter sie empfangen haben. Außerdem kann die zentrale Stelle ein globales Belegungsraster erstellen, das beispielsweise einem dem Haushalt neu hinzugefügten Roboter bereitgestellt werden kann. Die zentrale Stelle ist bevorzugt im Haushalt angeordnet und dazu eingerichtet, Informationen nur lokal zu empfangen oder bereitzustellen. Es kann auch eine zentrale Stelle außerhalb des Haushalts vorgesehen sein, beispielsweise in Form eines Servers oder eines Diensts, zum Beispiel in einer Cloud.

Nach wieder einem weiteren Aspekt der vorliegenden Erfindung umfasst ein erstes Verfahren zum Steuern eines autonom beweglichen Roboters für einen Haushalt Schritte des Abtastens des Haushalts im Umfeld des Roboters; des Bestimmens eines Belegungsrasters auf der Basis der Abtastung, wobei das Belegungsraster eine Vielzahl Zellen umfasst, wobei eine Zelle einen Abschnitt des Haushalts repräsentiert, wobei für die Zelle der Logit einer Belegung durch einen Gegenstand angegeben ist; und des Steuerns des Roboters im Haushalt derart, dass ein Abschnitt, dessen zugeordnete Zelle einen Logit aufweist, der einen vorbestimmten Schwellenwert übersteigt, nicht betreten wird. Der Logit betrifft den natürlichen Logarithmus einer Chance, dass die Zelle durch einen Gegenstand belegt ist; und die Chance umfasst eine Wahrscheinlichkeit, mit der die Zelle durch einen Gegenstand belegt ist, geteilt durch eine Gegenwahrscheinlichkeit.

Das Verfahren kann mittels eines hierin beschriebenen Roboters ausgeführt werden. Der Roboter kann eine Verarbeitungseinrichtung umfassen, die dazu eingerichtet ist, das Verfahren ganz oder teilweise auszuführen. Dazu kann die Verarbeitungseinrichtung einen programmierbaren Mikrocomputer oder Mikrocontroller umfassen und das Verfahren kann in Form eines Computerprogrammprodukts mit Programmcodemitteln vorliegen. Das Computerprogrammprodukt kann auch auf einem computerlesbaren Datenträger abgespeichert sein. Merkmale oder Vorteile des Verfahrens können auf die Vorrichtung übertragen werden oder umgekehrt.

Nach noch einem weiteren Aspekt der vorliegenden Erfindung umfasst ein Verfahren zum Steuern eines Systems mit mehreren Robotern Schritte des Steuerns wenigstens eines der Roboter im Haushalt auf der Basis eines lokalen Belegungsrasters; des Abtastens des Haushalts durch den wenigstens einen Roboter; des Bestimmens eines lokalen Belegungsrasters auf der Basis der Abtastung; und des Bereitstellens des bestimmten lokalen Belegungsrasters an wenigstens einen der anderen Roboter. Der andere Roboter kann dann auf der Basis des bereitgestellten sowie optional auch eines lokalen Belegungsrasters gesteuert werden. Das zweite Verfahren kann mit beliebig vielen hierin beschriebenen Robotern ausgeführt werden, die bevorzugt alle demselben Haushalt zugeordnet sind.

Ein Belegungsraster kann von einem Roboter direkt an einen oder mehrere Roboter bereitgestellt werden oder über eine zentrale Stelle. Die Roboter können auch nach Art eines vermaschten Netzes ("meshed network") miteinander kommunizieren, um ein Belegungsraster an mehrere Empfänger zu übermitteln.

Ein Belegungsraster kann vom bereitstellenden Roboter oder der zentralen Stelle digital signiert werden, um seine Identität oder Herkunft zu bezeugen. Dazu kann eine Prüfsumme ("Hash") des Belegungsrasters erstellt und mittels kryptographischer Methoden an das Belegungsraster angehängt werden. Ein nicht oder fehlerhaft unterschriebenes Belegungsraster kann von einem Roboter verworfen werden. Die Kommunikation eines Roboters kann verschlüsselt erfolgen. Ein Roboter kann eine Historie eingepflegter Belegungsraster führen, beispielsweise indem deren Prüfsummen gespeichert werden. Durch Vergleichen einer Prüfsumme eines empfangenen Belegungsrasters mit gespeicherten Prüfsummen kann verhindert werden, dass ein Belegungsraster mehrmals eingespielt wird.

Die Erfindung wird nun unter Bezug auf die beiliegenden Figuren genauer beschrieben, in denen:

Figur 1    einen Roboter in einem Haushalt;
Figur 2    ein System mit mehreren Robotern; und
Figur 3    ein Ablaufdiagramm eines Verfahrens

darstellt.

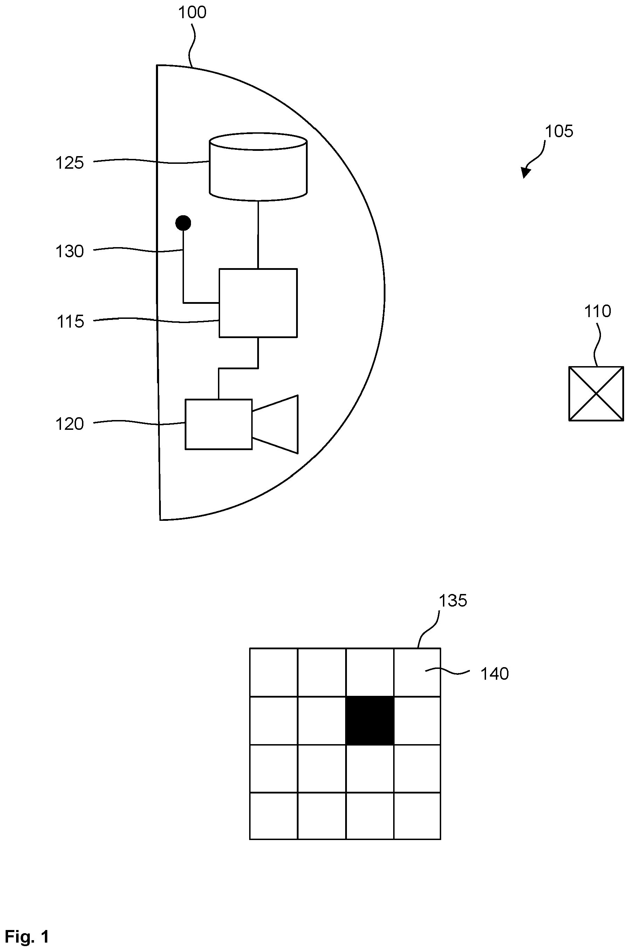

Figur 1 zeigt einen Roboter 100 in einem Haushalt 105. Der Roboter 100 ist im Haushalt 105 autonom beweglich und bevorzugt dazu eingerichtet, unterwegs oder an einem angesteuerten Ort eine vorbestimmte Funktion auszuführen. Die Funktion ist üblicherweise dem Haushalt 105 zugeordnet und kann etwa ein Transportieren oder Reinigen umfassen. Der dargestellte Roboter 100 ist bodengestützt und kann eine Antriebseinrichtung aufweisen, die Räder umfasst; andere Arten der Fortbewegung des Roboters 100 sind ebenfalls denkbar.

Der Haushalt 105 wird üblicherweise von wenigstens einer Person benutzt, die sich im Haushalt 105 bewegt und einen Gegenstand 110 im Haushalt bewegen kann. Der Gegenstand 110 kann eine feste Begrenzung wie eine Wand oder einen Einbauschrank umfassen. Aber auch bewegliche Gegenstände 110 sind möglich, beispielsweise ein bewegliches Möbel wie ein Tisch oder ein Stuhl oder ein Buch, ein Kabel oder ein Teppich. Eine bewegliche Tür kann in diesem Sinn genauso als beweglicher Gegenstand angesehen werden wie eine Person oder ein Haustier. Im Allgemeinen umfasst ein Gegenstand jede Art von Objekt, mit dem der Roboter 100 nicht kollidieren soll.

Ein Abschnitt, den der Roboter 100 nicht befahren soll, wird üblicherweise als verbotener oder No-Go Bereich bezeichnet und kann mit einem belegten Abschnitt zusammenfallen oder eigenständig sein. Auch ein verbotener Bereich kann permanenter oder temporärer Natur sein. Häufig kann ein verbotener Bereich noch abgetastet werden, zumindest bis in eine gewisse Entfernung vom Roboter 100. In einer Ausführungsform wird der No-Go Bereich im Belegungsraster mit einer Wahrscheinlichkeit von 1 belegt, deren Logit unendlich ist. So wird der Bereich stets als belegt angesehen, sodass der Roboter 100 ihn nicht betritt.

Der Roboter 100 umfasst bevorzugt eine Verarbeitungseinrichtung 115, wenigstens eine Abtasteinrichtung 120, eine Speichereinrichtung 125 und eine Kommunikationseinrichtung 130. Eine Antriebseinrichtung, die durch die Verarbeitungseinrichtung 115 steuerbar ist, um den Roboter 100 im Haushalt 105 zu bewegen, ist nicht dargestellt.

Die Verarbeitungseinrichtung 115 ist üblicherweise durch einen Embedded Controller gebildet. Die Abtasteinrichtung 120 ist dazu eingerichtet, einen Abschnitt des Haushalts 105 im Umfeld des Roboters 100 möglichst berührungslos abzutasten und zu bestimmen, ob der Abschnitt von einem Gegenstand 110 belegt oder frei ist. Beispielsweise kann die Abtasteinrichtung 120 eine Kamera, einen LiDAR-Sensor, einen Radarsensor oder einen Ultraschall-Sensor umfassen. Die Abtasteinrichtung 120 kann auch einen Kollisions- oder Kontaktsensor für einen Gegenstand 110 umfassen. Die Speichereinrichtung 125 ist dazu eingerichtet, ein Belegungsraster 135 aufzunehmen, das einen Belegungszustand des Haushalts 105 reflektiert. Die Kommunikationseinrichtung 130 ist zur bevorzugt drahtlosen Kommunikation mit einem anderen Roboter 100 oder einer anderen Stelle im Haushalt 105 eingerichtet.

Das Belegungsraster 135 umfasst eine Anzahl Zellen 140, die üblicherweise nach Art einer Matrix oder eines Schachbretts organisiert sind, wobei eine Zelle 140 einen Abschnitt des Haushalts 105 repräsentiert. In der dargestellten Ausführungsform wird eine Bodenfläche des Haushalts 105 durch eine zweidimensionale Matrix von Zellen 140 repräsentiert. Eine Zelle 140 trägt einen Wert, der einen Logit einer Wahrscheinlichkeit repräsentiert, dass ein zugeordneter Abschnitt des Haushalts 105 mit einem Gegenstand 110 belegt ist. In der Darstellung von Figur 1 ist eine helle Zelle einem niedrigen Logit-Wert und eine dunkle Zelle einem hohen Logit-Wert zugeordnet. Ist ein Belegungszustand eines Abschnitts nicht bekannt, so kann die Zelle 140 mit 0,5 initialisiert werden.

Die den Zellen 140 zugeordneten Werte umfassen jeweils Logit-Werte einer Belegung eines zugeordneten Abschnitts. Der Logit ist eine aus der Statistik bekannte Funktion, die wie folgt definiert ist:

$$\mathrm{logit(p)} := \ln\big(\mathrm{odds(p)}\big) = \ln(p/(1-p)).$$

Der Roboter 100 kann mittels der Abtasteinrichtung 120 einen Abschnitt des Haushalts 105 abtasten und eine Wahrscheinlichkeit p bestimmen, mit dem der Abschnitt durch einen Gegenstand 110 belegt ist. Bezüglich der Wahrscheinlichkeit p kann dann der Logit bestimmt werden. Eine wichtige Eigenschaft des Logit besteht darin, dass durch einfaches Addieren zweier Logit Werte ein weiterer Logit-Wert entsteht. So kann ein in einer Zelle 140 des Belegungsrasters 135 gespeicherter Logit-Wert durch Addition eines bestimmten Logit-Werts aktualisiert werden. Ob der Abschnitt als belegt oder frei gilt, kann durch Vergleichen eines abgespeicherten Logit-Werts mit einem vorbestimmten Schwellenwert bestimmt werden. Bei der Bestimmung kann eine Hysterese angewandt werden.

Der Roboter 100 kann derart gesteuert werden, dass er einen Abschnitt, der durch eine Zelle 140 repräsentiert ist, deren Logit-Wert über einem vorbestimmten Schwellenwert liegt, nicht betritt. Während des Fahrens kann der Roboter 100 das Belegungsraster 135 mittels Abtastungen aktualisieren.

Es wird vorgeschlagen, dass der Roboter 100 dazu eingerichtet ist, ein Belegungsraster 135 oder einen Abschnitt davon mit einem anderen Roboter 100 im Haushalt 105 auszutauschen. Dazu kann der Roboter 100 das von ihm bestimmte Belegungsraster 135 einem anderen Roboter 100 bereitstellen oder ein extern bereitgestelltes Belegungsraster 135 mit seinem lokalen vereinigen.

Es ist besonders bevorzugt, dass der Roboter 100 in seiner Speichereinrichtung 125 ein globales Belegungsraster 135 hält, nach dem er seine Bewegung im Haushalt 105 bestimmt, und ein lokales Belegungsraster 135, das Informationen umfasst, die auf der Basis einer oder mehrerer Abtastungen mittels der Abtasteinrichtung 120 gebildet sind. In vorbestimmten Abständen, beispielsweise immer nachdem eine vorbestimmte Anzahl Abtastungen erfolgt ist oder nachdem eine vorbestimmte Zeit verstrichen ist, kann das lokale Belegungsraster 135 nach außen bereitgestellt und in das eigene globale Belegungsraster 135 integriert werden. In einer anderen Ausführungsform kann auch jede Bestimmung unmittelbar in das globale Belegungsraster 135 eingearbeitet werden, während sie gleichzeitig im lokalen Belegungsraster 135 gesammelt und periodisch bereitgestellt wird. In noch einer weiteren Ausführungsform kann das lokale Belegungsraster 135 auch nach jeder erfolgten Abtastung bereitgestellt werden. Dies ermöglicht eine sehr geringe Latenzzeit, bis die Informationen an einem anderen Roboter 100 verfügbar sind, erfordert jedoch auch eine hohe Bandbreite für die Übertragung.

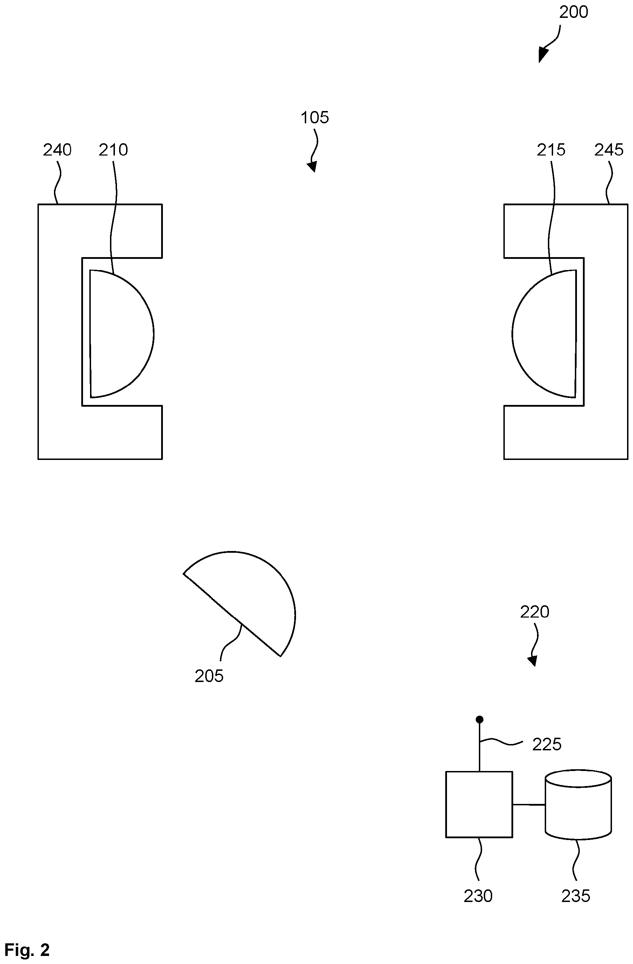

Figur 2 zeigt ein System 200 mit mehreren Robotern 100 in einem Haushalt 105. Beispielhaft sind eine erster Roboter 205, ein zweiter Roboter 210 und ein dritter Roboter 215 dargestellt. Außerdem ist beispielhaft eine optionale zentrale Stelle 220 vorgesehen, die dazu eingerichtet ist, mittels einer Kommunikationseinrichtung 225 mit den Robotern 205 - 215 zu kommunizieren, empfangene Informationen mittels einer Verarbeitungseinrichtung 230 zu verarbeiten und mittels einer Speichereinrichtung 235 abzuspeichern. Die Roboter 205 - 215 können Informationen über Belegungszustände von Abschnitten des Haushalts 105 bevorzugt untereinander teilen. Dazu sind verschiedene Szenarien denkbar.

In einem ersten beispielhaften Szenario fährt der erste Roboter 205 im Haushalt 105, während der zweite Roboter 210 in einer ersten Ladestation 240 und der dritte Roboter 215 in einer zweiten Ladestation 245 steht. Die Roboter 210 und 215 können abgeschaltet sein oder mit verminderter Leistung arbeiten, sodass sie weniger gut kommunikativ erreichbar sind. In diesem Szenario kann der erste Roboter 205 ein lokales Belegungsraster 135 aufbauen, ohne es gleichzeitig bereitzustellen. Erst bei Beendigung der Fahrt kann das lokale Belegungsraster 135 an die Roboter 210, 215 bereitgestellt werden, sodass diese in ihren Belegungsrastern 135 alle aktuellen Informationen einarbeiten können. So kann verhindert werden, dass die Roboter 210, 215 häufiger oder länger als nötig selbst aktiv werden müssen, um ihre Belegungsraster 135 zu aktualisieren.

In einem zweiten beispielhaften Szenario fahren die Roboter 205 und 210 im Haushalt, während der dritte Roboter 215 stillsteht. Exemplarisch wird davon ausgegangen, dass zunächst alle Roboter 205 - 215 neu initialisierte Belegungsraster 135 haben und dass keiner der Roboter 205 - 215 seine Position oder die eines anderen Roboters 205 - 215 auf dem Belegungsraster 135 kennt. Die fahrenden Roboter 205 und 210 können ihre Belegungsraster 135 aufbauen, indem sie eigene Erkenntnisse sofort oder nach Aufbauen eines lokalen Belegungsrasters 135 einander mitteilen. Beenden die Roboter 205 und 210 ihre Fahrten im Haushalt 105, so kann der letzte fahrende Roboter 205, 210 sein Belegungsraster 135 allen anderen Robotern 205 - 215 bereitstellen, da er die aktuellsten Belegungsdaten hat.

In einem dritten beispielhaften Szenario liegt allen Robotern 205 - 215 ein Belegungsraster 135 vor und jeder Roboter 205 - 215 kennt seine eigene Position in der Navigationskarte und das zugehörige eigene, lokale Belegungsraster 135. Fährt nun wie im ersten Szenario nur ein Roboter 205 durch den Haushalt 105, so kann dieser dabei ein lokales Belegungsraster 135 erstellen. Bei Ende seiner Fahrt kann die lokale Belegungskarte 135 in das globale Belegungsraster 135 integriert werden. Eine periodische Übermittlung des lokalen Belegungsrasters 135 kann nicht erforderlich sein, wenn die empfangenden Roboter 210, 215 das Belegungsraster 135 gerade nicht verwenden.

Da es möglich ist, dass der erste Roboter 205 bei der neu gestarteten Fahrt in einer anderen Umgebung arbeitet als bei einem vorangehenden Einsatz, sodass ein lokales Belegungsraster 135 nicht dem zuvor vorliegenden globalen Belegungsraster 135 entspricht, muss vor dem ersten Addieren des temporären Belegungsrasters 135 geprüft werden, ob sich der erste Roboter 205 im vorliegenden globalen Belegungsraster 135 lokalisieren kann oder ob das neu zu integrierende Update des temporären Belegungsrasters 135 dem bisherigen globalen Belegungsraster 135 zuzuordnen ist. Ist dies der Fall, so liefert der erste Roboter 205 Aktualisierungen zum vorliegenden globalen Belegungsraster 135, ansonsten erstellt er wie in Szenario 1 ein neues globales Belegungsraster 135.

Wie im ersten Szenario werden die nicht-aktiven Roboter 210, 215 in ihrer Ruhephase nicht mit dem Empfangen und Verarbeiten von Daten belastet und erhalten das globale Belegungsraster 135 nicht, solange der erste Roboter 205 noch fährt. Da diese Roboter 210, 215 die gesamte Zeit an ihrer Ladestation 240, 245 stehen, benötigen sie die Aktualisierungen der Belegungsraster 135 auch nicht. Stattdessen sendet der erste Roboter 205 das aktualisierte globale Belegungsraster 135 nach Beendigung der Fahrt an die anderen Roboter 210, 215, sodass diese das Belegungsraster 135 mit einem Mal übernehmen können. Wie im zweiten Szenario ist von den Robotern 210, 215 nun jeweils zu prüfen, ob es sich bei dem empfangenen Belegungsraster 135 um eine Aktualisierung ihres vorhandenen globalen Belegungsrasters 135, oder um ein alternatives, neues globales Belegungsraster 135 handelt, welches das vorhandene globale Belegungsraster 135 nicht überschreiben soll. Auf diese Weise stehen am Ende allen Robotern 205 - 215 alle gesammelten Belegungsraster 135 in der aktuellsten Version zur Verfügung.

In einem vierten Szenario liegt allen Robotern 205 - 215 ein Belegungsraster 135 vor und jeder Roboter 205 - 215 kennt seine eigene Position bezüglich der Navigationskarte und des zugeordneten Belegungsrasters 135. Ähnlich wie im zweiten Szenario bewegen sich dann die Roboter 205 und 210, während der dritte Roboter 215 stillsteht. Die fahrenden Roboter 205, 210 erweitern oder aktualisieren jeweils ihre Belegungsraster 135, indem sie auf der Basis von Abtastungen ihres Umfelds ein lokales Belegungsraster 135 erstellen und dieses periodisch in das globale Belegungsraster 135 einpflegen. Da das lokale Belegungsraster 135 für den anderen sich bewegenden Roboter 210 nützlich ist, wird es ihm bevorzugt ebenfalls bereitgestellt. Der Roboter 210 kann das empfangene Belegungsraster 135 in sein eigenes globales Belegungsraster 135 integrieren und optional in entsprechender Weise sein lokales Belegungsraster 135 dem ersten Roboter 205 bereitstellen. Ein letztes Mal sendet jeder Roboter 205, 210 sein temporäres Belegungsraster 135 an den anderen Roboter 205, 210, wenn er seine Fahrt beendet. Der nicht aktive Roboter 215 erhält erst vom letzten noch fahrenden Roboter 205, 210 eine Aktualisierung, die alle Informationen umfasst, die der fahrende Roboter 205, 210 innerhalb seines letzten Einsatzes gesammelt hat.

Voraussetzung für das Überschreiben des globalen Belegungsrasters 135 der anderen Roboter 210, 215 ist, dass diese eine Übereinstimmung mit ihrem eigenen globalen Belegungsraster 135 feststellen. Sind keinerlei Übereinstimmungen zu finden, so kann es sein, dass die Roboter 205 - 215 zwar in einem Verband agieren, jedoch in unterschiedlichen Umgebungen zum Einsatz gekommen sind. In diesem Fall wird bevorzugt das globale Belegungsraster 135 des letzten aktiven Roboters 205, 210 als alternatives Belegungsraster 135 auf den anderen Robotern 205, 210, 215 gespeichert. Der jeweils zuletzt davor gefahrene Roboter 205, 210 sendet in diesem Fall sein erstelltes globales Belegungsraster 135 an alle anderen Roboter 210, 215, bis schließlich jedes der gesammelten globalen Belegungsraster 135 einander zugeordnet werden konnten oder als neue alternative Belegungsraster 135 auf allen Robotern 205 - 215 hinterlegt ist. Auf diese Weise stehen allen Robotern 205 - 215 am Ende alle gesammelten Belegungsraster 135 in der jeweils aktuellsten Version zur Verfügung.

Durch die beschriebene Kooperation können alle Roboter 205 - 215 über die aktuellsten Belegungsraster 135 mit den neuesten Aktualisierungen verfügen, um sie einer eigenen Navigation zu Grunde zu legen. Die beschriebene Vorgehensweise ist auch anwendbar, wenn die Roboter 205 - 215 des Verbands im gleichen Haushalt 105 unterschiedliche Aufgaben ausführen, beispielsweise Saugen, Wischen, Transportieren oder eine Pflegeaufgabe. Es können sich kürzere Explorationszeiten und somit eine schnellere und effizientere Aufgabendurchführung ergeben, wenn mehrere Roboter 205 - 215 kooperativ im gleichen Haushalt 105 explorieren. Durch den kooperativen Austausch von Aktualisierungen oder Erweiterungen der Belegungsraster 135 erhalten auch jene Roboter 205 - 215, die nicht fahren, die neusten Belegungsraster 135.

Vorteilhaft kann auch ein Austausch von Belegungsrastern 135 von anderen Umgebungen erfolgen, beispielsweise wenn die Roboter 205 - 215 in unterschiedlichen Räumen oder auf unterschiedlichen Stockwerken unterwegs sind. Selbst wenn ein Roboter 205 - 215 dort zuvor noch nicht gefahren ist, kann er danach ohne Exploration sofort dort eingesetzt werden, da ihm bereits die aktuellsten Belegungsraster 135 vorliegen. Ein Benutzer muss angepasste Bereiche wie ein verbotener Bereich oder zusätzliche Informationen wie eine Bezeichnung von Räumen, Do-Not-Disturb Zeiten oder Situationen für bestimmte Räume nur einmal für das globale Belegungsraster 135 und nicht für jeden Roboter 205 - 215 einzeln erstellen.

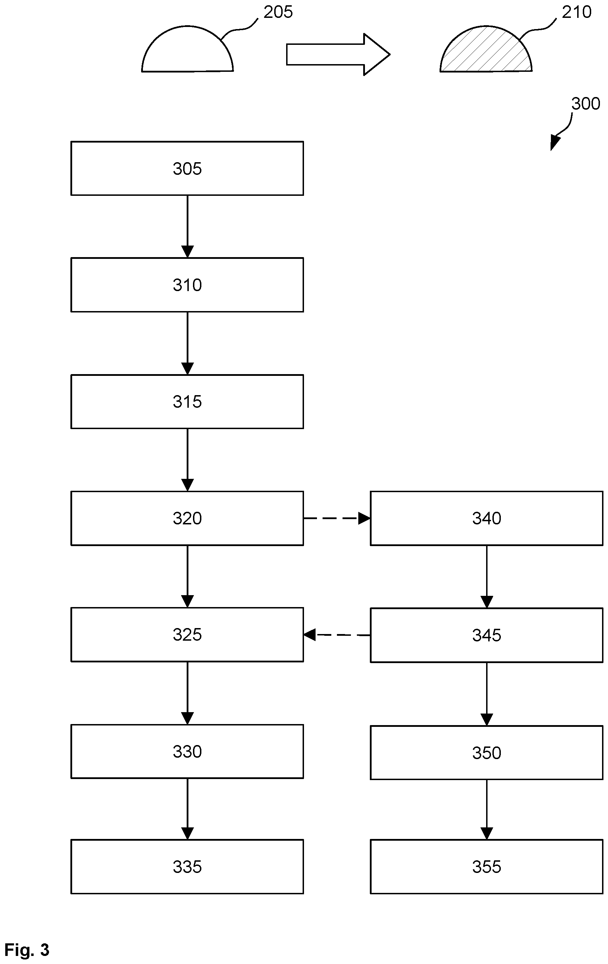

Figur 3 zeigt ein Ablaufdiagramm eines Verfahrens 300 zur Übermittlung von Karteninformationen von einem ersten beispielhaften Roboter 205 an einen zweiten beispielhaften Roboter 210, die in demselben Haushalt 105 sind. In einem linken Bereich sind Schritte dargestellt, die dem ersten Roboter 205 zugeordnet sind, und in einem rechten Bereich Schritte, die dem zweiten Roboter 210 zugeordnet sind. Es ist zu verstehen, dass die Roboter 205, 210 auch ihre Rollen vertauschen können. Ein bidirektionaler Austausch ist ebenfalls möglich. Außerdem können Karteninformationen zwischen beliebigen Robotern 205 - 215 in einem Haushalt 105 ausgetauscht werden, und es können beliebig viele Roboter 205 - 215 am gezeigten Verfahren 300 teilnehmen. Die oben mit Bezug auf Figur 2 geschilderten beispielhaften Szenarien sind mit dem Verfahren 300 kompatibel.

In einem Schritt 305 tastet der erste Roboter 205 sein Umfeld im Haushalt 105 ab. Eine Abtastung kann eine oder mehrere Abschnitte betreffen, denen unterschiedliche Zellen 140 des Belegungsrasters 135 zugeordnet sind. In einem Schritt 310 kann das Belegungsraster 135 auf der Basis der Abtastung aktualisiert oder erweitert werden. Die Aktualisierung erfolgt üblicherweise auf einem lokalen Belegungsraster 135, während eine Navigation des ersten Roboters 205 durch ein globales Belegungsraster 135 beeinflusst wird.

In einem Schritt 315 wird bestimmt, ob ausreichend Erfassungen durchgeführt wurden. Ist dies nicht der Fall, so können die Schritte 305 bis 315 erneut durchlaufen werden. Andernfalls kann das erstellte lokale Belegungsraster 135 in einem Schritt 320 an einen oder mehrere andere Roboter 210, 215 bereitgestellt werden. Ist bekannt, welche Roboter 210, 215 die Aktualisierung erhalten sollen, so kann eine Liste mit Identifikationen all derer Roboter 210, 215 erstellt werden, die den Erhalt der Aktualisierung noch nicht bestätigt haben. Trifft eine Bestätigung eines Roboters 210, 215 ein, so kann die Identifikation von der Liste entfernt werden. In einem Schritt 325 wird bestimmt, ob die Liste leer ist. Ist dies der Fall, so kann das Belegungsraster 135 in einem Schritt 330 verworfen oder auch archiviert werden. Außerdem kann ein neues lokales Belegungsraster 135 angelegt werden, das bei einem neuen Durchlauf der Schritte 305, 310 mit neuen Informationen versehen wird. Das neue Belegungsraster 135 kann auch bereits angelegt und gefüllt werden, wenn noch nicht alle empfangenden Roboter 210, 215 den Empfang quittiert haben.

Der zweite Roboter 210 kann in einem Schritt 340 das Belegungsraster 135 vom ersten Roboter 205 empfangen. In einem Schritt 345 kann er den Empfang beim ersten Roboter 205 bestätigen. In einem Schritt 350 kann er prüfen, ob das Belegungsraster 135 ihm bereits bekannt ist. Dazu kann er eine Prüfsumme über das empfangene Belegungsraster 135 bestimmen und mit einer Liste von Prüfsummen vergleichen, die auf der Basis zuvor erhaltener Belegungsraster 135 bestimmt wurden. Außerdem kann der zweite Roboter 210 prüfen, ob er die empfangenen Informationen mit den eigenen Informationen korrelieren kann. Kann er eine Lage des empfangenen Belegungsrasters 135 bezüglich des eigenen globalen Belegungsrasters 135 nicht bestimmen, so kann er das empfangene Raster verwerfen oder als alternatives Belegungsraster 135 behalten. Ein später empfangenes Belegungsraster 135 kann dann bezüglich aller gespeicherter alternativer Belegungsraster 135 geprüft werden.

Bezugszeichen

| | |
|---|---|
| 100 | Roboter |
| 105 | Haushalt |
| 110 | Gegenstand, Objekt, Person, Hindernis |
| 115 | Verarbeitungseinrichtung |
| 120 | Abtasteinrichtung, Sensor |
| 125 | Speichereinrichtung |
| 130 | Kommunikationseinrichtung |
| 135 | Belegungsraster, Belegungskarte, occupancy |

grid

| 200 | System |
| 205 | erster Roboter |
| 210 | zweiter Roboter |
| 215 | dritter Roboter |
| 220 | zentrale Stelle |
| 225 | Kommunikationseinrichtung |
| 230 | Verarbeitungseinrichtung |
| 235 | Speichereinrichtung |
| 240 | erste Ladestation |
| 245 | zweite Ladestation |

| 300 | Verfahren |
| 305 | Umfeld abtasten |
| 310 | lokales Belegungsraster verbessern |
| 315 | ausreichend Erfassungen? |
| 320 | lokales Belegungsraster bereitstellen |
| 325 | alle Empfänger bestätigt? |
| 330 | Belegungsraster verwerfen oder archivieren |
| 335 | neues lokales Belegungsraster anlegen |
| 340 | lokales Belegungsraster empfangen |
| 345 | Belegungsraster bestätigen |
| 350 | Belegungsraster bekannt? |
| 355 | empfangenes und lokales Belegungsraster integrieren |

**Patentansprüche**

1. Autonom beweglicher Roboter (100) für einen Haushalt (105), wobei der Roboter (100) folgendes umfasst:

   - einen Sensor (120) zur Abtastung des Haushalts (105) im Umfeld des Roboters (100);
   - eine Verarbeitungseinrichtung (115) zur Bestimmung eines Belegungsrasters (135) auf der Basis der Abtastung;
   - wobei das Belegungsraster (135) eine Vielzahl Zellen (140) umfasst,
   - wobei eine Zelle (140) einen Abschnitt des Haushalts (105) repräsentiert,
   - wobei für die Zelle (140) der Logit einer Belegung durch einen Gegenstand (110) angegeben ist;
   - wobei der Logit den natürlichen Logarithmus einer Chance betrifft, dass die Zelle (140) durch einen Gegenstand (110) belegt ist;
   - wobei die Chance eine Wahrscheinlichkeit einer Belegung, geteilt durch eine Wahrscheinlichkeit einer Nichtbelegung der Zelle (140) umfasst;
   - wobei die Verarbeitungseinrichtung (115) dazu eingerichtet ist, eine Bewegung des Roboters (100) im Haushalt (105) derart zu steuern, dass ein Abschnitt, dessen zugehörige Zelle (140) einen Logit aufweist, der einen vorbestimmten Schwellenwert übersteigt, nicht betreten wird **gekennzeichnet durch** eine Kommunikationseinrichtung zum Empfangen eines weiteren Belegungsrasters (135) eines anderen Roboters (100) im Haushalt (105); wobei die Verarbeitungseinrichtung (115) dazu eingerichtet ist, das weitere Belegungsraster (135) in das vorhandene zu integrieren, indem die Logit-Werte zueinander korrespondierender Zellen (140) jeweils addiert werden, wobei ein Ergebnis der Addition in der entsprechenden Zelle im Belegungsraster abgelegt wird.

2. Roboter (100) nach Anspruch 1, wobei die Verarbeitungseinrichtung (115) dazu eingerichtet ist, das empfangene Belegungsraster (135) zu speichern, falls keine zueinander korrespondierenden Zellen (140) zwischen den Belegungsrastern (135) bestimmt werden können.

3. Roboter (100) nach einem der vorangehenden Ansprüche, wobei die Verarbeitungseinrichtung (115) dazu eingerichtet ist, einen Abschnitt des Haushalts (105) mittels des Sensors abzutasten, den Logit der Belegung des Abschnitts auf der Basis der Abtastung zu bestimmen und den bestimmten Logit zu einem Logit einer den Abschnitt repräsentierenden Zelle (140) des Belegungsrasters (135) zu addieren.

4. Roboter (100) nach Anspruch 3, ferner umfassend eine Kommunikationseinrichtung (130) zur Bereitstellung des bestimmten Belegungsrasters (135), mit dem das bestimmte Belegungsraster an zumindest einen anderen Roboter im selben Haushalt bereitstellbar ist, wobei die von den Robotern bestimmten Belegungsraster in beiden Richtungen austauschbar sind.

5. Roboter (100) nach Anspruch 4, wobei die Verarbeitungseinrichtung (115) dazu eingerichtet ist, auf der Basis einer Vielzahl Abtastungen ein lokales Belegungsraster (135) zu bestimmen und das lokale Belegungsraster (135) bereitzustellen.

6. Roboter (100) nach Anspruch 5, wobei die Verarbeitungseinrichtung (115) dazu eingerichtet ist, das lokale Belegungsraster (135) nach dem Bereitstellen in ein globales Belegungsraster (135) zu integrieren und das lokale Belegungsraster (135) neu zu initialisieren.

7. Roboter (100) nach Anspruch 5 oder 6, wobei das lokale Belegungsraster (135) an vorbestimmte Empfänger bereitgestellt und so lange bereitgehalten wird, bis es erfolgreich an alle vorbestimmten Empfänger übermittelt wurde.

8. System (200), umfassend einen ersten Roboter (100) nach einem der Ansprüche 1 oder 2 und einen zweiten Roboter (100) nach einem der Ansprüche 3 bis 7.

9. System (200) nach Anspruch 8, ferner umfassend eine zentrale Stelle, die dazu eingerichtet ist, ein Belegungsraster (135) von einem der Roboter (100) zu empfangen und einem anderen Roboter (100) bereitzustellen.

10. Verfahren (300) zum Steuern eines Systems (200) mit mehreren Robotern (100) jeweils nach einem der Ansprüche 1 bis 7, wobei das Verfahren folgende Schritte umfasst:

    - Steuern wenigstens eines der Roboter (100) im Haushalt (105) auf der Basis eines lokalen Belegungsrasters (135);
    - Abtasten des Haushalts (105) durch den wenigsten einen Roboter (100) und Bestimmen eines lokalen Belegungsrasters (135) auf der Basis der Abtastung; und
    - Bereitstellen des bestimmten lokalen Belegungsrasters (135) an wenigstens einen der anderen Roboter (100).

**Claims**

1. Autonomously moveable robot (100) for a household (105), wherein the robot (100) comprises the following:

    - a sensor (120) for scanning the household (105) in the environment of the robot (100);
    - a processing facility (115) for determining an occupancy grid (135) based on the scan;
    - wherein the occupancy grid (135) comprises a plurality of cells (140),
    - wherein a cell (140) represents a section of the household (105),
    - wherein the logit of an occupancy by an object (110) is indicated for the cell (140);
    - wherein the logit refers to the natural logarithm of a possibility that the cell (140) is occupied by an object (110);
    - wherein the possibility comprises a probability of an occupancy, divided by a probability of a non-occupancy of the cell (140);
    - wherein the processing facility (115) is configured to control a movement of the robot (100) in the household (105) such that a section is not entered whose associated cell (140) has a logit that exceeds a predetermined threshold value, **characterised by** a communication facility for receiving another occupancy grid (135) of another robot (100) in the household (105); wherein the processing facility (115) is configured to integrate the other occupancy grid (135) into the existing grid, in that the logit values of the cells (140) which correspond to one another are added together in each case, wherein a result of the addition is stored in the corresponding cell in the occupancy grid.

2. Robot (100) according to claim 1, wherein the processing facility (115) is configured to save the occupancy grid (135) received if no cells (140) which correspond to one another can be determined between the occupancy grids (135).

3. Robot (100) according to one of the preceding claims, wherein the processing facility (115) is configured to scan a section of the household (105) by means of the sensor, to determine the logit of the occupancy of the section based on the scan and to add the logit determined to a logit of a cell (140) of the occupancy grid (135) which represents the section.

4. Robot (100) according to claim 3, further comprising a communication facility (130) for providing the determined occupancy grid (135), with which the determined occupancy grid can be provided to at least one other robot in the same household, wherein the occupancy grid determined by the robot can be exchanged both ways.

5. Robot (100) according to claim 4, wherein the processing facility (115) is configured to determine a local occupancy grid (135) based on a plurality of scans and to provide the local occupancy grid (135).

6. Robot (100) according to claim 5, wherein the processing facility (115) is configured, after the provision, to integrate the local occupancy grid (135) into a global occupancy grid and to reinitialise the local occupancy grid (135).

7. Robot (100) according to claim 5 or 6, wherein the local occupancy grid (135) is provided to predetermined recipients and is kept available until it was successfully communicated to all predetermined recipients.

8. System (200) comprising a first robot (100) according to one of claims 1 or 2 and a second robot (100) according to one of claims 3 to 7.

9. System (200) according to claim 8, further comprising a central point which is configured to receive an occupancy grid (135) from one of the robots (100) and to provide it to another robot (100).

10. Method (300) for controlling a system (200) with a plurality of robots (100) according to one of claims 1 to 7 in each case, wherein the method comprises the following steps:

- controlling at least one of the robots (100) in the household (105) based on a local occupancy grid (135);
- scanning the household (105) by way of the at least one robot (100) and determining a local occupancy grid (135) based on the scan; and
- providing the determined local occupancy grid (135) to at least one of the other robots (100).

## Revendications

1. Robot à déplacement autonome (100) pour un ménage (105), dans lequel le robot (100) comprend:

   - un détecteur (120) pour l'exploration du ménage (105) dans l'environnement du robot (100) ;
   - un dispositif de traitement (115) pour la détermination d'une grille d'occupation (135) sur base de l'exploration ;
   - dans lequel la grille d'occupation (135) comprend une pluralité de cellules (140),
   - une cellule (140) représentant une section du ménage (105),
   - pour la cellule (140) le Logit d'un remplissage étant indiqué par un objet (110) ;
   - dans lequel le Logit concerne le logarithme naturel d'une probabilité pour que la cellule (140) soit occupée par un objet (110) ;
   - dans lequel la probabilité comprend la vraisemblance d'une occupation, divisée par la vraisemblance d'une non-occupation de la cellule (140) ;
   - dans lequel le dispositif de traitement (115) est configuré pour piloter un mouvement du robot (110) dans le ménage (105) de sorte qu'une section, dont la cellule associée (140) présente un Logit qui dépasse une valeur de seuil prédéterminée, ne soit pas franchie, **caractérisé par** un dispositif de communication pour la réception d'une grille d'occupation (135) supplémentaire d'un autre robot (100) dans le ménage (105) ; le dispositif de traitement (115) étant configuré pour intégrer la grille d'occupation (135) supplémentaire dans celle disponible, en ce que les valeurs du Logit de cellules (140) correspondant l'une à l'autre sont à chaque fois ajoutées, un résultat de l'addition étant déposé dans la cellule correspondante dans la grille d'occupation.

2. Robot (100) selon la revendication 1, dans lequel le dispositif de traitement (115) est configuré pour stocker la grille d'occupation (135) reçue, dans le cas où aucune cellule (140) correspondant l'une à l'autre n'a pu être déterminée entre les grilles d'occupation (135).

3. Robot (100) selon l'une des revendications précédentes, dans lequel le dispositif de traitement (115) est configuré pour explorer une section du ménage (105) au moyen du détecteur, pour déterminer le Logit d'occupation de la section sur base de l'exploration et pour ajouter le Logit déterminé à un Logit d'une cellule (140) de la grille d'occupation (135) représentant la section.

4. Robot (100) selon la revendication 3, comprenant en outre un dispositif de communication (130) pour la fourniture de la grille d'occupation (135) déterminée, avec lequel la grille d'occupation déterminée peut être mise à disposition d'au moins un autre robot dans le même ménage, les grilles d'occupation déterminées par les robots pouvant être échangées dans les deux directions.

5. Robot (100) selon la revendication 4, dans lequel le dispositif de traitement (115) est configuré pour déterminer, sur base d'une pluralité d'explorations, une grille d'occupation locale (135) et mettre à disposition la grille d'occupation locale (135).

6. Robot (100) selon la revendication 5, dans lequel le dispositif de traitement (115) est configuré pour intégrer la grille d'occupation locale (135) dans une grille d'occupation globale (135) après la mise à disposition et pour réinitialiser la grille d'occupation (135) locale.

7. Robot (100) selon la revendication 5 ou 6, dans lequel la grille d'occupation locale (135) est mise à disposition de récepteurs prédéterminés et maintenue dans cet état jusqu'à ce qu'elle soit efficacement transmise à tous les récepteurs prédéterminés.

8. Système (200), comprenant un premier robot (100) selon l'une des revendications 1 ou 2, et un deuxième robot (100) selon l'une des revendications 3 à 7.

9. Système (200) selon la revendication 8, comprenant en outre une position centrale, laquelle est configurée pour réceptionner une grille d'occupation (135) d'un des robots (100) et pour la mettre à disposition d'un autre robot (100).

10. Procédé (300) de pilotage d'un système (200) comprenant plusieurs robots (100) à chaque fois selon l'une des revendications 1 à 7, dans lequel le procédé comprend les étapes suivantes :

    - pilotage d'au moins un des robots (100) dans le ménage (105) sur base d'une grille d'occupation locale (135) ;
    - exploration du ménage (105) par le au moins un robot (100) et détermination d'une grille d'occupation (135) locale sur base de l'exploration ; et

- mise à disposition de la grille d'occupation locale (135) à au moins un des autres robots (100).

**Fig. 1**

**Fig. 2**

205

210

300

| 305 |
|---|

| 310 |
|---|

| 315 |
|---|

| 320 | | 340 |
|---|---|---|

| 325 | | 345 |
|---|---|---|

| 330 | | 350 |
|---|---|---|

| 335 | | 355 |
|---|---|---|

**Fig. 3**

**IN DER BESCHREIBUNG AUFGEFÜHRTE DOKUMENTE**

**In der Beschreibung aufgeführte Patentdokumente**

- EP 3660617 A1